# EUROPEAN PATENT APPLICATION

(11) **EP 1 205 340 A1**
(43) Date of publication of application: **15.05.2002**
(21) Application number: 00310002.1
(22) Date of filing: 10.11.2000
(51) Int. Cl.: B60L 11/18

(54) **Electric vehicle charging station**

(71) Applicant: Mould, Adrian Robert, Wirral CH 60 5RZ (GB)
(72) Inventor: Mould, Adrian Robert, Wirral CH 60 5RZ (GB)
(74) Representative: Cardwell, Stuart Martin

(57) **Abstract**

The present invention relates to a vehicle charging system comprising a vehicle charging bay or docking station having a source of power for charging a battery means of an electric vehicle via input connection means (13, 15) while the vehicle is present in the bay. The vehicle has input connection receiving means (5) to receive power from the input connection means and the supply of power to the vehicle is controlled automatically on entry of the vehicle into the charging bay. In one embodiment (Figure 7) the vehicle wheels are used to move charging electrodes (55) into contact with the vehicle input connection receiving means. In another embodiment (Figure 5) a matrix of charging electrodes (35) are provided and means is provided for automatically selecting which electrodes are to be used for charging purposes. Vehicle identification means is provided to facilitate this automatically.

## Description

The present invention relates to the charging of electric road vehicles.

The electric vehicle has several drawbacks relating to limited battery life. Current proposals require a vehicle driver to manually connect the vehicle to a source of power to charge up the vehicle. Because of the time taken to charge up a battery vehicle, facilities are provided for charging up the vehicle at the owners premises where typically a vehicle will be parked up for several hours (usually overnight). The need to manually connect the vehicle to the source of power is perceived as inconvenient.

My main aim is to solve the battery life by facilitating charging of a vehicle battery without any intervention from the driver.

Accordingly, a first aspect of my invention provides a vehicle charging system comprising a vehicle charging bay or docking station having a source of power for charging a battery of an electric vehicle via input connection means (hereinafter referred to as ICM) while the vehicle is present in the bay, the vehicle having input connection receiving means (hereinafter referred as ICRM) to receive power from the input connection means to charge up the battery, and wherein the supply of power to vehicle is controlled automatically on entry of the vehicle into the charging bay or docking station.

With my invention a vehicle battery can be charged up automatically whilst it is parked. By charging up a vehicle every time it parks with no intervention from the driver the limited life of the battery becomes less of an issue.

The vehicle has identification means and the charging bay or docking station is provided with reading means to ascertain the identity of the vehicle in the bay. A barcode can provide one way of proving identification means on the vehicle and the charging bay is provided with a barcode reader. Identification means provides data about the type of vehicle, for example, where this is required to determine the appropriate charging rates, the position of the input receiving means, and data relevant for billing the vehicle owner/driver/keeper for the amount of charge provided. It is envisaged that the voltage and current supplied could be varied to suit the needs of the vehicle as necessary.

The input connection means (ICM) will usually physically connect with the input connection receiving means (ICRM) mounted on the vehicle. A plurality of input connection means may be provided to accommodate variations in vehicle position within the bay and different positions of input connection receiving means on the vehicle. More preferably the position of the latter is standard to all vehicles. Where standard position is not used, the vehicle identification means will communicate to the charging bay the position of the input means so that a appropriate connections can be utilised. Movement of the ICM into contact with the ICRM may be achieved by the action of the vehicle moving into the bay. Thus the vehicle may contact an actuating bar which will move when contacted by the vehicle ― say one the road wheels ― to move the ICM into contact with the ICRM.

In another embodiment the vehicle position is read by the charging bay reader and one of a series of alternative ICM's actuated. Input of power to ICRM will begin when verification checks have been completed with regard to the account for charging purposes and correct connection of the ICM to ICRM.

As mentioned the invention is best implemented if the industry adopts a standard for the positioning the electrodes on the electric vehicle and if the industry adopts a common standard for the identification means and its position on the vehicle. Each parking bay could then be of a similar design to accommodate the standard electrode and vehicle identification position.

According to another aspect of the invention, a method of charging an electric vehicle using a parking bay charging system comprises the following steps:-
1. Parking the vehicle in the bay;
2. Reading the vehicle identification code;
3. Engaging the charging electrodes;
4. Initiating the charging sequence and continuing the charging until predetermined amount of charge has been input or until the vehicle is removed from the charging bay.

Preferably, the user is billed on direct debit or account basis. Alternatively, the charging bay may be provided with a meter and charging carried out according to the monies input into the meter.

According to my invention the charging bays can be located anywhere that a car would usually be parked. Thus the vehicle battery can be topped up whenever it is parked in one of those charging bays. The need for trailing leads is dispensed with and the potential range is increased when a vehicle can be charged up at said charging bays. The long charging up time of electric vehicles can be absorbed or aurgmented during the day, for example when a vehicle is stopped on shopping trips, when the user is at the office or during short breaks on motorway journeys.

The present invention will now be described further hereinafter, by way of example only, with reference to the accompanying drawings; in which:-
Figure 1 is a schematic side view of one embodiment of charging bay according to the invention;
Figure 2 is a plan view of the charging bay of figure 1;
Figure 3 is a schematic side view of the charging bay of figure 1 with a vehicle in position;
Figure 4 is a schematic underneath plan view of a bottom of a motor vehicle;
Figure 5 is a plan view of alternative embodiment of charging bay;
Figure 6 is a schematic perspective view of a charging bay of figure 5 bearing additional details according to an alternative embodiment; and
Figure 7 is a perspective view of a charging bay and motor vehicle according to another embodiment.

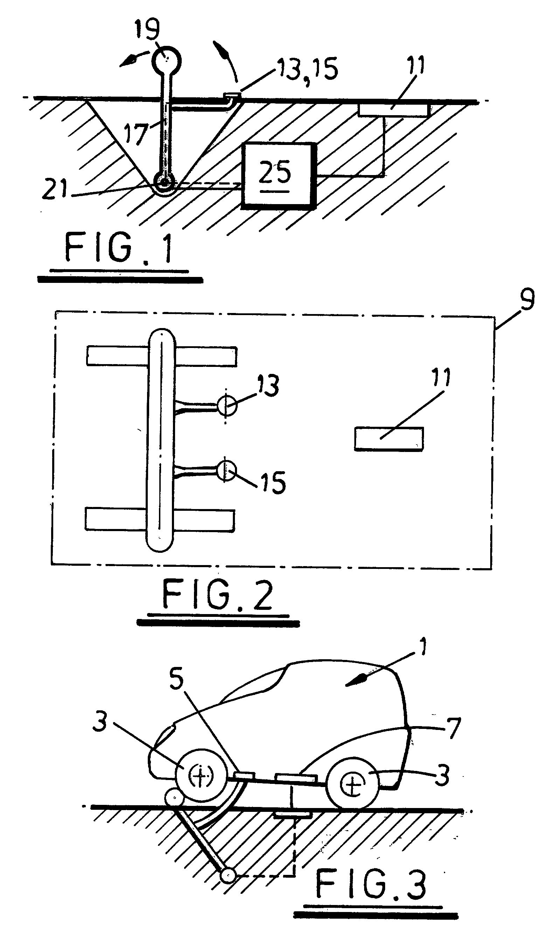

Referring firstly to figures 1, 2 and 3, the vehicle is shown schematically at 1 having ground wheels 3 and carrying electrodes one of which is shown at 5 and a barcode identification means shown at 7.

The charging bay is shown in dotted outline at 9 in figure 2 and incorporates reader means 11 for reading the vehicle identification means 7 and electrodes 13, 15 carried by a pivotal control arm 17. An actuating bar 19 is carried by the control arm 17 which is mounted for pivotal movement at 21 A control unit is shown at 25.

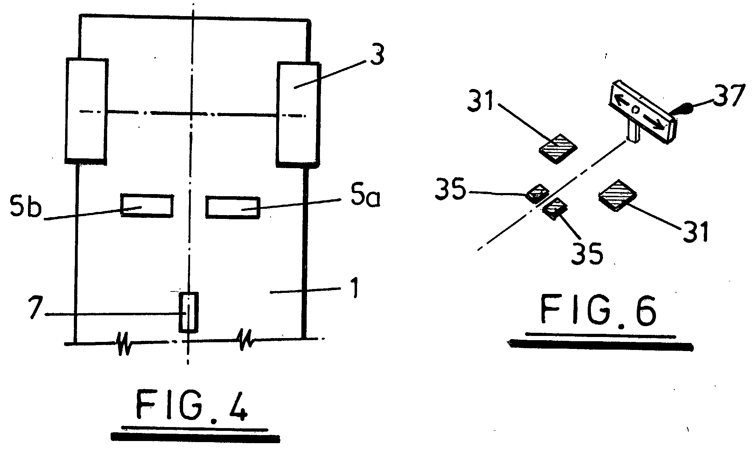

When a vehicle enters the charging bay its front wheels contact the bar 19 and cause it to pivot to the left in the illustration which in turn causes the contacts 13, 15 to move upwardly and into contact with respective contacts 5 carried by the vehicle. The contacts 5 may comprise strips extending width wise across the vehicle to cater for different lateral positioning of the vehicle as it draws into the bay and situated to opposite sides of the centre line of the vehicle. Figure 4 shows a typical example with elongate electrodes 5a, 5b attached on the underside of the vehicle. These may be behind small doors that open to allow contact with the charge input means 13, 15 and close to keep put moisture and road grit etc. Drop down doors may used on off-road type vehicles as mud may clog up a sliding door. In the embodiment illustrated with respect to figures 1, 2 and 3 it is assumed that there would be a standard relationship between the position of the wheels and the position of the electrodes thereby simplifying the construction.

When the vehicle is in the position shown in figure 3 the reader 11 reads the identification plate 7 carried by the vehicle and operates on a handshake basis to ensure that connections are correctly made before putting significant power into the electrodes. The identification means can serve to provide billing details to the control unit 25 and any other pertinent data regarding charging of the batteries.

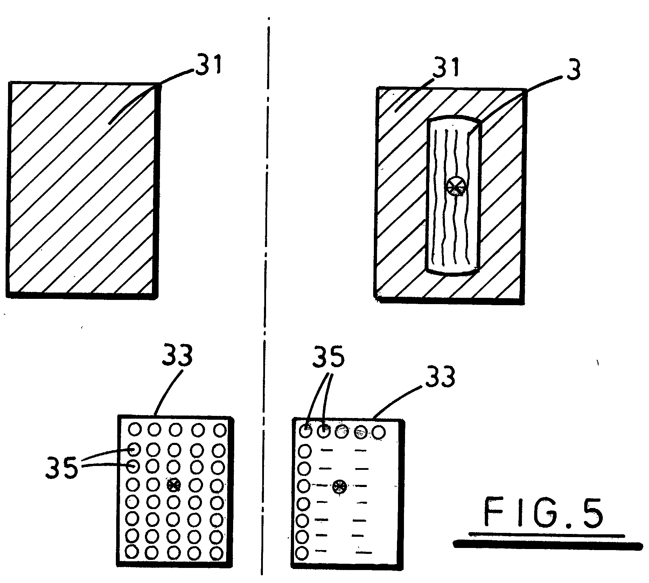

Figure 5 describes an alternative arrangement of charging bay which comprises 2 matrices of either pressure sensors or photocells or combinations thereof to detect where two of the tyres of the vehicle are located in relation to the bay. In the illustration sensing pads 31 are shown spaced laterally apart and also shown are two electrodes 33 matrices disposed in relation to the position of the sensors 31. When a vehicle drives into the charging bay two of its wheels 3 are positioned on the sensors 31 (only one wheel is shown in the example) and the centre of contact determined by the sensors. This in turn determines which of the plurality of electrodes 35 (shown as 5x8 matrix) will make contact with the respective contacts provided on the underside of the vehicle. The appropriate electrode may then be raised by an appropriate actuator after the doors or flaps on the vehicle have opened. This is usually controlled by handshake communication between the vehicle and the control module having read the vehicle identification plate. This type of bay has the advantage of being able to accommodate vehicles having the contacts positioned in a range of different positions and can therefore accommodate vehicles of different sizes.

In an alternative embodiment, the electrodes in the vehicle will drop to the floor and there will be sliding panels covering the floor electrodes. This would have the advantage of facilitating the use of small electrodes in the vehicle. The floor electrodes may consist of thin strips of conductive material. A narrow rod containing two electrodes would make contact somewhere on this patch but not cover more than a few strips and power would then be supplied to the appropriate strips if not to them all.

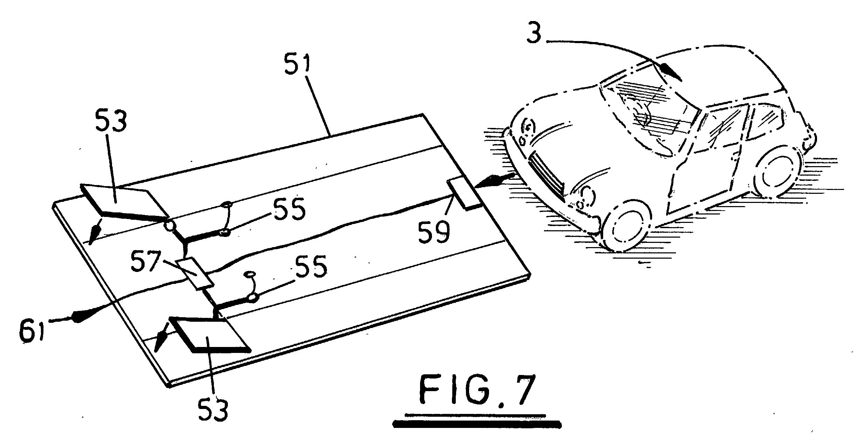

Figure 6 shows a sensor and electrode matrix similar to that of figure 5 but further showing position of a control board 37 having lights which are illuminated to indicate to the driver whether they should move to the right or to the left, further forward or backward when pulling into the bay to accommodate a situation where the driver does not position a vehicle correctly on the sensor pads so that correct identification of the appropriate electrode can not be determined.

Figure 7 illustrates arrangements similar to that of figure 1 but intended primarily as a home/single vehicle system and comprising a framework 51 which has mounted moveable paddles 53 which are attached to electrodes 55. Also shown is a control box 57 and a reader 59. A power input lead is shown at 61. A vehicle 3 drives onto the frame and its wheels run in the channels leading to the panels 53 and on engaging the panels cause them to pivot downwardly bringing the electrodes 55 into contact with corresponding electrodes on the underside of the vehicle so that charging can begin once the reader 59 has verified the identity of the vehicle and correct connection of the electrodes on the charging bay with those of the vehicle.

In the case of commercial charging bays, it may be desirable to have the means of preventing a non-electric vehicle to enter the charging bay. This may be achieved by providing retractable bollards at the entry to the charging bay. In such a situation it may be preferable to have the barcode identification means positioned at the front of the vehicle so that it can be read by a reader allowing the bollards to descend so that the vehicle can enter the charging bay.

In other commercial applications vehicles may be parked at one end of a conveyor belt system with the vehicles being driven on at one end and recovered at the other after a predetermined period of time, facilitating multiple charging bays along a conveyor belt similar to the conveyor arrangements used in drive in car washes.

## Claims

1. A vehicle charging system comprising a vehicle charging bay or docking station having a source of power for charging a battery of an electric vehicle via input connection means (13, 15) while the vehicle is present in the bay, the vehicle having input connection receiving means (5; 5a, 5b,) to receive power from the input connection means to charge up the battery, and wherein the supply of power to vehicle is controlled automatically on entry of the vehicle into the charging bay or docking station.

2. A vehicle charging system as claimed in claim 1 for use with a vehicle having identification means (7) and wherein the charging bay or docking station is provided with reading means (11) to ascertain the identity of the vehicle in the bay.

3. A charging system as claimed in claim 2 in which the identification means (7) on the vehicle is in the form of a barcode and the charging bay is provided with a barcode reader.

4. A charging system as claimed in claim 2 or 3 in which the identification means (7) provides data about the type of vehicle.

5. A charging system as claimed in claim 2, 3 or 4 in which the identification means (7) provides data relevant for billing the vehicle owner/driver/keeper for the amount of charge provided.

6. A charging system as claimed in any one of the preceding claims in which the input connection means (13, 15; 35; 55) physically connects with the input connection receiving means (5) mounted on the vehicle.

7. A charging system as claimed in any one of the preceding claims in which a plurality of input connection means (35) are provided to accommodate variations in vehicle position within the bay and different positions of input connection receiving means (5) on different vehicles.

8. A charging system as claimed in any one of claims 1 to 7 in which the vehicle identification means communicates to the charging bay the position of the input means so that appropriate connections (33) can be utilised.

9. A charging system as claimed in any one of the preceding claims in which movement of the input connection means (13, 15) into contact with the input connection receiving means (5) is achieved by the action of the vehicle moving into the bay.

10. A method of charging an electric vehicle provided with charging electrodes (5) using a parking bay charging system, the method comprising the following steps:-
1. Parking the vehicle (1) in the bay;
2. Reading the vehicle identification code (7);
3. Engaging the charging electrodes (5);
4. Initiating the charging sequence and continuing the charging until a predetermined amount of charge has been input or until the vehicle is removed from the charging bay.
